# EUROPEAN PATENT APPLICATION

(11) **EP 4 844 684 A1**
(43) Date of publication of application: **25.11.2026**
(21) Application number: 25890395.4
(22) Date of filing: 11.12.2025
(51) Int. Cl.: G06T 7/80, G06T 5/90, G06T 7/90, G06T 3/4015

(54) **METHOD AND DEVICE FOR CALIBRATING BATTERY EXTERNAL INSPECTION CAMERA**

(30) Priority: 02.04.2025 KR 20250042644
(71) Applicant: LG ENERGY SOLUTION, LTD., Seoul 07335 (KR)
(72) Inventor: CHO, Minkeun, DAEJEON 34122 (KR); JEON, Hyoseung, DAEJEON 34122 (KR); HONG, Seung Gyun, DAEJEON 34122 (KR)
(74) Representative: Goddar, Heinz J.
(86) International application number: PCT/KR2025/095797
(87) International publication number: WO 2026/212117

(57) **Abstract**

A method for calibrating a battery exterior inspection camera performed by at least one processor is provided. The method includes generating a reference image by photographing a color checker including a plurality of color regions with a reference camera, generating a calibration target image by photographing the color checker with a calibration target camera, extracting a first red (R) value, a first green (G) value, and a first blue (B) value corresponding to the plurality of color regions of the color checker from the reference image, extracting a second R value, a second G value, and a second B value corresponding to the plurality of color regions from the calibration target image, and generating a look-up table for each RGB channel based on the extracted first R value, the first G value, the first B value, the second R value, the second G value, and the second B value.

## Description

### [TECHNICAL FIELD]

The present invention relates to a method and apparatus for calibrating a battery exterior inspection camera, and more particularly, to a method and apparatus for calibrating a battery exterior inspection camera to match colors and brightness of a plurality of cameras.

### [BACKGROUND ART]

It is important to perform an exterior inspection of a battery to prevent fire hazards and improve stability of the battery. Generally, an exterior inspection is performed to check for shapes such as pressing or dents, alignment, or presence of exterior damage of the battery through images captured by a plurality of cameras. However, when there is a difference in color and brightness between the plurality of cameras, there is a problem that it is difficult to perform a precise exterior inspection of the battery. To solve this, a method of adjusting a magnification of intensity of remaining colors based on intensity of any one color among RGB in the related art has been used, but since it takes a considerable amount of time for image correction, there is a disadvantage that it is not suitable for the battery exterior inspection requiring high-speed inspection.

### [SUMMARY OF THE INVENTION]

### [TECHNICAL PROBLEM]

The present invention provides a method for calibrating a battery exterior inspection camera, a computer program stored in a computer-readable medium, a computer-readable medium storing a computer program, and an apparatus (system) for solving the above problems.

### [SOLUTION TO THE PROBLEM]

The present invention may be implemented in various ways, including a method, an apparatus (system), a computer program stored in a computer-readable medium, or a computer-readable medium storing a computer program.

According to an embodiment of the present invention, a method for calibrating a battery exterior inspection camera performed by at least one processor can include generating a reference image by photographing a color checker including a plurality of color regions with a reference camera, generating a calibration target image by photographing the color checker with a calibration target camera, extracting a first red (R) value, a first green (G) value, and a first blue (B) value corresponding to the plurality of color regions of the color checker from the reference image, extracting a second R value, a second G value, and a second B value corresponding to the plurality of color regions from the calibration target image, generating a look-up table (LUT) for each RGB channel based on the extracted first R value, the first G value, the first B value, the second R value, the second G value, and the second B value, and calibrating a color and a brightness of the calibration target camera based on the generated LUT for each RGB channel.

According to an embodiment of the present invention, the extracting of the first R value, the first G value, and the first B value corresponding to the plurality of color regions of the color checker from the reference image can include converting the reference image of a Bayer pattern into a reference image of an RGB pattern based on a demosaic algorithm, and extracting the first R value, the first G value, and the first B value corresponding to the plurality of color regions from the reference image of the RGB pattern.

According to an embodiment of the present invention, the generating of the LUT for each RGB channel based on the extracted first R value, the first G value the first B value, the the second R value, the second G value, and the second B value can include calculating a first regression equation of the first R value and the second R value; extracting an R channel coefficient and an R channel constant of the calculated first regression equation, and generating an R channel LUT based on the extracted R channel coefficient and the R channel constant.

According to an embodiment of the present invention, the generating of the LUT for each RGB channel based on the extracted first R value, the first G value, the first B value, the second R value, the second G value, and the second B value can include calculating a second regression equation of the first G value and the second G value, extracting a G channel coefficient and a G channel constant of the calculated second regression equation, and generating a G channel LUT based on the extracted G channel coefficient and the G channel constant.

According to an embodiment of the present invention, the generating of the LUT for each RGB channel based on the extracted first R value, the first G value, the first B value, the second R value, the second G value, and the second B value can include calculating a third regression equation of the first B value and the second B value, extracting a B channel coefficient and a B channel constant of the calculated third regression equation, and generating a B channel LUT based on the extracted B channel coefficient and the B channel constant.

According to an embodiment of the present invention, the calibrating of the color and the brightness of the calibration target camera based on the generated LUT for each RGB channel can include calibrating the color and the brightness of the calibration target camera by converting the second R value, the second G value, and the second B value based on the R channel LUT, the G channel LUT, and the B channel LUT.

According to an embodiment of the present invention, the method can further include storing the generated R channel LUT, the G channel LUT, and the B channel LUT in a database. The calibrating of the color and the brightness of the calibration target camera based on the generated LUT for each RGB channel can include retrieving the R channel LUT, the G channel LUT, and the B channel LUT stored in the database, and calibrating the color and the brightness of the calibration target camera based on the retrieved R channel LUT, the G channel LUT, and the B channel LUT.

According to an embodiment of the present invention, the method can further include determining gain values of the reference camera and the calibration target camera as reference values.

A computer program stored in a non-transitory computer-readable recording medium is provided to execute the above-described method according to an embodiment of the present invention on a computer.

A battery exterior inspection camera calibration apparatus according to an embodiment of the present invention can include a reference camera and a calibration target camera configured to perform a battery exterior inspection, a database storing a look-up table (LUT) for each red, green and blue (RGB) channel for calibrating a color and a brightness of the calibration target camera, and a control apparatus configured to generate the LUT for each RGB channel using a reference image generated by photographing a color checker with the reference camera and a calibration target image generated by photographing the color checker with the calibration target camera, and calibrate the color and the brightness of the calibration target camera based on the generated LUT for each RGB channel.

According to an embodiment of the present invention, the control apparatus can extract a first R value, a first G value, and a first B value corresponding to a plurality of color regions of the color checker from the reference image, extracts a second R value, a second G value, and a second B value corresponding to the plurality of color regions from the calibration target image, generates an LUT for each RGB channel based on the extracted first R value, the first G value, the first B value, the second R value, the second G value, and the second B value, and calibrates the color and the brightness of the calibration target camera based on the generated LUT for each RGB channel.

According to an embodiment of the present invention, the control apparatus can convert the reference image of a Bayer pattern into a reference image of an RGB pattern based on a demosaic algorithm, and can extract the first R value, the first G value, and the first B value corresponding to the plurality of color regions from the reference image of the RGB pattern.

According to an embodiment of the present invention, the control apparatus can calculate a first regression equation of the first R value and the second R value, extracts an R channel coefficient and an R channel constant of the calculated first regression equation, and generates an R channel LUT based on the extracted R channel coefficient and the R channel constant.

According to an embodiment of the present invention, the control apparatus can calculate a second regression equation of the first G value and the second G value, extract a G channel coefficient and a G channel constant of the calculated second regression equation, and generate a G channel LUT based on the extracted G channel coefficient and the G channel constant.

According to an embodiment of the present invention, the control apparatus can calculate a third regression equation of the first B value and the second B value, extract a B channel coefficient and a B channel constant of the calculated third regression equation, and generate a B channel LUT based on the extracted B channel coefficient and the B channel constant.

According to an embodiment of the present invention, the control apparatus can calibrate the color and the brightness of the calibration target camera by converting the second R value, the second G value, and the second B value based on the R channel LUT, the G channel LUT, and the B channel LUT.

According to an embodiment of the present invention, the control apparatus can store the generated R channel LUT, the G channel LUT, and the B channel LUT in a database, retrieve the R channel LUT, the G channel LUT, and the B channel LUT stored in the database, and calibrate the color and the brightness of the calibration target camera based on the retrieved R channel LUT, the G channel LUT, and the B channel LUT.

According to an embodiment of the present invention, the control apparatus can determine gain values of the reference camera and the calibration target camera as a reference value.

### [ADVANTAGEOUS EFFECTS OF THE INVENTION]

In various embodiments of the present invention, the control apparatus calculates the LUT for each RGB channel and uses the same for calibrating the color and brightness of the calibration target camera, thereby improving calculation speed and effectively reducing computing resources required for camera calibration.

In various embodiments of the present invention, when the LUT for each RGB channel is used, color calibration can be performed by only one LUT inquiry per pixel, so that the number of operations can be effectively reduced compared to a calibration method using multiplication operation, addition operation, and the like of the related art.

The effects of the present invention are not limited to the effects mentioned above, and other effects not mentioned will be clearly understood by the person having ordinary skill in the art (hereinafter referred to as "those skilled in the art") in the technical field to which the present invention belongs from the description of the claims.

### [BRIEF DESCRIPTION OF DRAWINGS]

Embodiments of the present invention will be described below with reference to the accompanying drawings, wherein like reference numerals refer to similar elements, but are not limited thereto.
FIG. 1 is a functional block diagram illustrating an internal configuration of a control apparatus according to an embodiment of the present invention.
FIG. 2 is a block diagram illustrating a process of calculating an LUT for each RGB channel according to an embodiment of the present invention.
FIG. 3 is a block diagram illustrating a process in which image calibration is performed according to an embodiment of the present invention.
FIG. 4 is a block diagram illustrating a reference camera 110 and a plurality of calibration target cameras according to an embodiment of the present invention.
FIG. 5 is a flowchart illustrating an example of a method for calibrating a battery exterior inspection camera according to an embodiment of the present invention.
FIG. 6 illustrates a computing apparatus for performing the above-described method and/or embodiments.

### [MODES FOR CARRYING OUT THE INVENTION]

Hereinafter, specific details for carrying out the present invention will be described in detail with reference to the accompanying drawings. However, in the following description, specific descriptions of well-known functions or configurations will be omitted if they are likely to unnecessarily obscure the gist of the present invention.

In the accompanying drawings, identical or corresponding components are assigned the same reference numerals. Additionally, in the description of the embodiments below, a redundant description of identical or corresponding components may be omitted. However, even if a description of a component is omitted, it is not intended that such a component is excluded from an embodiment.

The advantages and features of the embodiments disclosed herein, and methods for achieving them, will become apparent with reference to the embodiments described below in conjunction with the accompanying drawings. However, the present invention is not limited to the embodiments disclosed below but may be embodied in various different forms. These embodiments are provided only to fully disclose the present invention and to fully inform one of ordinary skill in the art of the scope of the invention.

The terms used in this specification will be briefly described, and the disclosed embodiments will be described in detail. The terms used herein have been selected from general terms that are currently widely used, while taking into account their functions in the present invention. However, these terms may change depending on the intent of a person skilled in the relevant art, judicial precedents, or the emergence of new technologies. In addition, in certain cases, there are terms arbitrarily selected by the applicant, and in such cases, the meanings thereof will be described in detail in the corresponding portion of the description of the invention. Therefore, the terms used in the present invention should be defined based on their meanings and the overall content of the present invention, rather than their simple names.

In this specification, singular expressions include plural expressions unless the context clearly indicates otherwise. In addition, plural expressions include singular expressions unless the context clearly indicates otherwise. Throughout this specification, when a portion is stated to "comprise" a component, this means that it may further include other components and does not exclude other components, unless otherwise stated.

In the present invention, terms such as "comprise" and "comprising" may indicate the presence of features, steps, operations, elements, and/or components, but such terms do not exclude the addition of one or more other functions, steps, operations, elements, components, and/or combinations thereof.

In the present invention, when a component is referred to as being "coupled," "combined," "connected," "associated" with, or "reacting" with another component, the component may be directly coupled, combined, connected to, associated with, and/or react with, the other component, but is not limited thereto. For example, there may be one or more intermediate components between one component and another component. Additionally, in the present invention, "and/or" may include each of one or more of the listed items or a combination of at least a portion of one or more of the listed items.

In the present invention, terms such as "first" and "second" are used to distinguish a component from another component, and the aforementioned components are not limited by these terms. For example, a "first" component may be an element of the same or similar form as a "second" component.

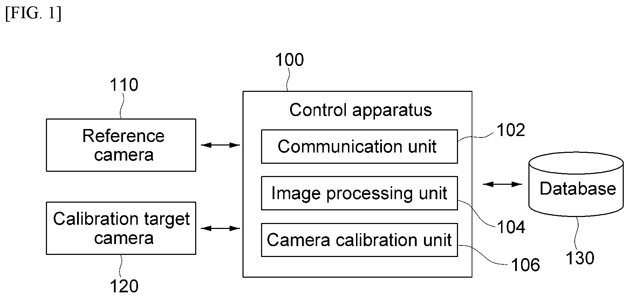

FIG. 1 is a functional block diagram illustrating an internal configuration of a control apparatus 100 according to an embodiment of the present invention. According to an embodiment, the control apparatus 100 is an apparatus for performing data processing for matching colors and brightness of battery exterior inspection cameras, and may include a communication unit 102, an image processing unit 104, a camera calibration unit 106, and the like. For example, the control apparatus 100 may communicate with a reference camera 110, a calibration target camera 120, a database 130, and the like, and transmit and receive data for color and brightness calibration of the camera.

According to an embodiment, there may be a plurality of cameras for performing a battery exterior inspection. In order to match colors and brightness between the plurality of cameras, one camera may be determined as the reference camera 110, and the remaining cameras may be determined as the calibration target camera 120. For example, a camera that generates an image having RGB values most similar to actual RGB colors of a target among the plurality of cameras may be determined as the reference camera 110. To this end, the control apparatus 100 may generate a plurality of images by photographing a color checker with the plurality of cameras, calculate RGB values of each image, and then compare the calculated RGB values with actual RGB values of the color checker to determine the reference camera 110 and/or the calibration target camera 120.

According to an embodiment, the communication unit 102 may communicate with the reference camera 110 and/or the calibration target camera 120 and receive images photographed by respective cameras. For example, the reference camera 110 and the calibration target camera 120 may photograph a color checker including a plurality of color regions to generate a reference image and a calibration target image. In this case, the communication unit 102 may receive the reference image and the calibration target image generated from the reference camera 110 and the calibration target camera 120.

In addition, the communication unit 102 may communicate with the database 130 and store or retrieve a look-up table (LUT) for each RGB channel for camera color and brightness calibration. That is, the control apparatus 100 may generate the LUT for each RGB channel and store the LUT in the database 130, and retrieve the LUT for each RGB channel stored in the database 130 to calibrate the color and brightness of the calibration target camera 120.

According to an embodiment, the image processing unit 104 may perform image processing for calibrating RGB color values corresponding to the calibration target image to RGB color values corresponding to the reference image. First, the image processing unit 104 may determine gain values of the reference camera and the calibration target camera as reference values. That is, the image processing unit 104 may specify color ratio values of the reference camera and the calibration target camera as a default value of 1 or 2.

Then, the image processing unit 104 may convert the reference image and the calibration target image of a Bayer pattern into images of an RGB pattern. For example, the image processing unit 104 may perform image conversion using an arbitrary demosaic algorithm. When the reference image and the calibration target image of the RGB pattern are generated, the image processing unit 104 may extract a first R value, a first G value, and a first B value corresponding to the plurality of color regions of the color checker from the reference image, and extract a second R value, a second G value, and a second B value corresponding to the plurality of color regions from the calibration target image. Here, each RGB value does not represent one specified value, but may represent a set of RGB values extracted from the plurality of color regions included in the color checker.

According to an embodiment, the camera calibration unit 106 may calculate an LUT for each RGB channel based on each RGB value calculated by the image processing unit 104, and calibrate the color and brightness of the calibration target camera 120 based on the LUT. In order to calculate the LUT for each RGB channel, the camera calibration unit 106 may calculate channel coefficients and channel constants for each RGB channel using a first-order regression equation such as Equation 1 below. [Equation 1] $\begin{matrix}{R}_{cal} = {a}_{R} ⋅ {R}_{ref} + {b}_{R} \\ {G}_{cal} = {a}_{G} ⋅ {G}_{ref} + {b}_{G} \\ {B}_{cal} = {a}_{B} ⋅ {B}_{ref} + {b}_{B}\end{matrix}$

Here, *R_{ref}*, *G_{ref},* and *B_{ref}* represent the first R value, the first G value, and the first B value, respectively, and *R_{cal}*, *G_{cal}* , and *B_{cal}* may represent the second R value, the second G value, and the second B value, respectively. In addition, *a_{R}*, *a_{G}*, and *a_{B}* represent a scale which is a channel coefficient, and *b_{R}*, *b_{G}*, and *b_{B}* may represent an offset which is a channel constant. In this case, the camera calibration unit 106 may calculate a look-up table (LUT) for each RGB channel based on the channel coefficient and the channel constant of each color.

According to an embodiment, the control apparatus 100 may store the generated LUT for each RGB channel in the database 130. Then, when performing calibration on the calibration target camera 120, the control apparatus 100 may retrieve the LUT for each RGB channel by searching the database 130 and calibrate the color and brightness of the calibration target camera 120 based on the extracted LUT for each RGB channel.

In FIG. 1, each functional component included in the control apparatus 100 is described separately, but this is only to assist in understanding the present invention, and one computing device may perform two or more functions. With such a configuration, the control apparatus 100 calculates the LUT for each RGB channel and uses the same for calibrating the color and brightness of the calibration target camera 120, thereby improving calculation speed while effectively reducing computing resources required for camera calibration.

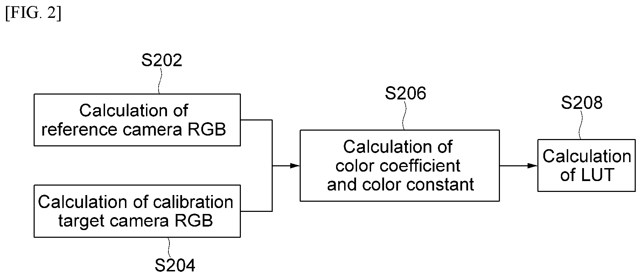

FIG. 2 is a block diagram illustrating a process of calculating an LUT for each RGB channel according to an embodiment of the present invention. As described above, the control apparatus (100 in FIG. 1) may calibrate the color and brightness of the calibration target camera based on the reference camera. For example, the control apparatus may generate a reference image by photographing a color checker including a plurality of color regions with the reference camera, and generate a calibration target image by photographing the color checker with the calibration target camera. In this case, the control apparatus may extract reference camera RGB, that is, a first R value, a first G value, and a first B value (S202). In addition, the control apparatus may extract calibration target camera RGB, that is, a corresponding second R value, second G value, and second B value (S204).

When each RGB value is calculated as described above, the control apparatus may calculate RGB color coefficients and color constants based thereon (S206). Here, the color coefficients may include an R channel coefficient, a G channel coefficient, and a B channel coefficient, and the color constants may include an R channel constant, a G channel constant, and a B channel constant. When the color coefficients and color constants are calculated as described above, the control apparatus may calculate the LUT for each RGB channel based on Equation 2 below. [Equation 2] $LUT = \left[0-255\right] ⋅ scale + offset$

Here, [0-255] represents a pixel value of each RGB, scale represents a channel coefficient for each RGB channel, and offset may represent a channel constant for each RGB channel. When the LUT for each RGB channel is used as described above, color calibration can be performed with only one LUT inquiry per pixel, so that the number of operations can be effectively reduced compared to a calibration method using multiplication, addition, and the like of the related art.

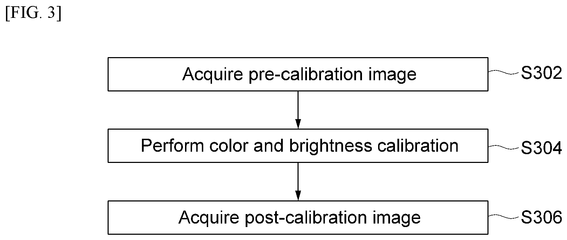

FIG. 3 is a block diagram illustrating a process in which image calibration is performed according to an embodiment of the present invention. As described above, the control apparatus (100 in FIG. 1) may obtain a pre-calibration image by generating a reference image by photographing a color checker including a plurality of color regions with the reference camera and generating a calibration target image by photographing the color checker with the calibration target camera (S302).

According to an embodiment, the control apparatus may perform color and brightness calibration by converting individual RGB values before calibration into LUT values for each pixel included in the calibration target image (S304). That is, the control apparatus may extract RGB values after calibration by inputting the RGB values of each pixel included in the calibration target image into the LUT for each RGB channel stored in the database. In this case, the control apparatus may obtain a post-calibration image by calibrating and/or reconstructing the image based on the extracted post-calibration RGB values (S306).

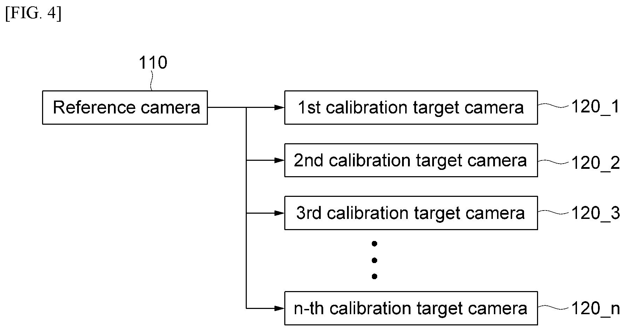

FIG. 4 is a block diagram illustrating a reference camera 110 and a plurality of calibration target cameras 120 according to an embodiment of the present invention. According to an embodiment, RGB values of the plurality of calibration target cameras 120 may be calibrated based on RGB values of the reference camera 110. In this case, a separate LUT for each RGB channel may be calculated and managed for each calibration target camera 120. That is, a first LUT corresponding to a first calibration target camera 120_1 may be calculated, a second LUT corresponding to a second calibration target camera 120_2 may be calculated, a third LUT corresponding to a third calibration target camera 120_3 may be calculated, and an n-th LUT corresponding to an n-th calibration target camera 120_n may be calculated.

In this case, color and brightness of the calibration target images photographed by respective calibration target cameras 120 may be calibrated by retrieving the corresponding LUTs. For example, the first calibration target camera 120_1 may be calibrated based on the first LUT, the second calibration target camera 120_2 may be calibrated based on the second LUT, the third calibration target camera 120_3 may be calibrated based on the third LUT, and a fourth calibration target camera 120_4 may be calibrated based on a fourth LUT.

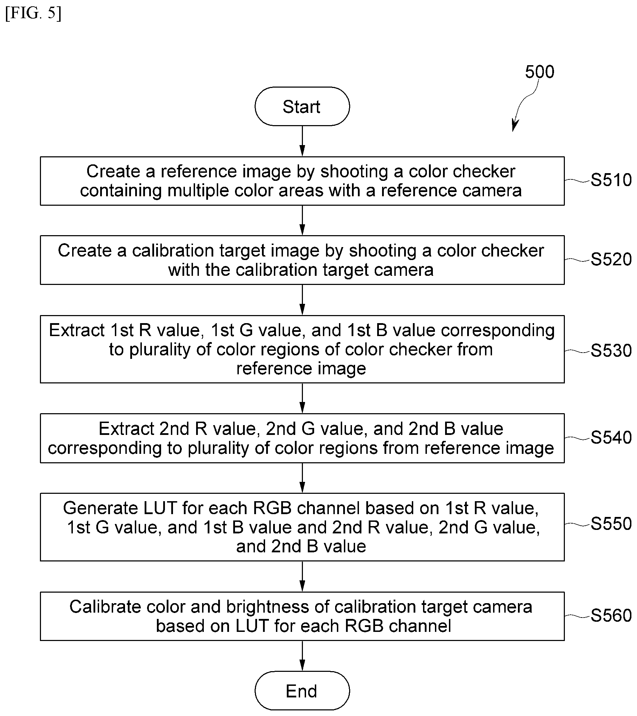

FIG. 5 is a flowchart illustrating an example of a battery exterior inspection camera calibration method 500 according to an embodiment of the present invention. The battery exterior inspection camera calibration method 500 may be performed by at least one processor (for example, at least one processor of a computing device). According to an embodiment, the processor may generate a reference image by photographing a color checker including a plurality of color regions with the reference camera (S510). In addition, the processor may generate a calibration target image by photographing the color checker with the calibration target camera (S520).

The processor may extract a first R value, a first G value, and a first B value corresponding to the plurality of color regions of the color checker from the reference image (S530). For example, the processor may convert the reference image of a Bayer pattern into a reference image of an RGB pattern based on a demosaic algorithm, and extract the first R value, the first G value, and the first B value corresponding to the plurality of color regions from the reference image of the RGB pattern. In addition, the processor may extract a second R value, a second G value, and a second B value corresponding to the plurality of color regions from the calibration target image (S540). In this case, the processor may convert the calibration target image of a Bayer pattern into a calibration target image of an RGB pattern based on a demosaic algorithm, and extract the second R value, the second G value, and the second B value corresponding to the plurality of color regions from the calibration target image of the RGB pattern.

The processor may generate an LUT for each RGB channel based on the extracted first R value, first G value, and first B value and the second R value, second G value, and second B value (S550). For example, the processor may calculate a first regression equation of the first R value and the second R value, extract an R channel coefficient and an R channel constant of the calculated first regression equation, and generate an R channel LUT based on the extracted R channel coefficient and R channel constant. In this case, the processor may generate a G channel LUT and a B channel LUT after calculating a second regression equation and a third regression equation for the G channel and the B channel, similarly to the above. In this case, the processor may store the generated R channel LUT, G channel LUT, and B channel LUT in the database.

The processor may calibrate the color and brightness of the calibration target camera based on the generated LUT for each RGB channel (S560). The processor may calibrate the color and brightness of the calibration target camera by converting the second R value, the second G value, and the second B value based on the R channel LUT, the G channel LUT, and the B channel LUT. For example, the processor may retrieve the R channel LUT, the G channel LUT, and the B channel LUT stored in the database, and calibrate the color and brightness of the calibration target camera based on the retrieved R channel LUT, G channel LUT, and B channel LUT.

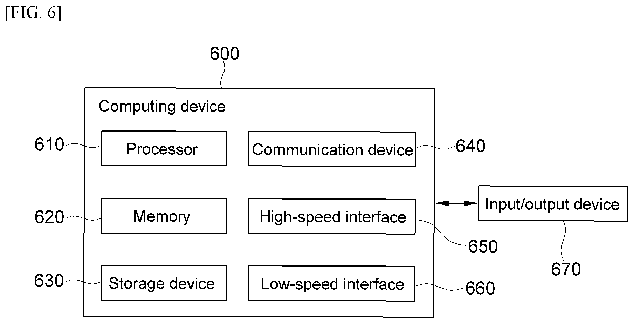

FIG. 6 illustrates a computing apparatus 600 for performing the above-described method and/or embodiments. According to an embodiment, the computing device 600 may include the above-described control device 100 of FIG. 1, and may be implemented using hardware and/or software configured to interact with a user. For example, the computing apparatus 600 may be configured to support a virtual reality (VR), augmented reality (AR), or mixed reality (MR) environment, but is not limited thereto. The computing apparatus 600 may include, but is not limited to, a laptop, a desktop, a workstation, a personal digital assistant (PDA), a server, a blade server, a main frame, and the like. The components of the computing apparatus 600, their connection relationships, and their functions described above are intended to be illustrative, and are not intended to limit the implementation of the present invention described and/or claimed herein.

The computing apparatus 600 includes a processor 610, a memory 620, a storage device 630, a communication device 640, a high-speed interface 650 connected to the memory 620 and a high-speed expansion port, and a low-speed interface 660 connected to a low-speed bus and a storage device. Each of the components 610, 620, 630, 640, and 650 may be interconnected using various buses, and may be mounted on the same main board or mounted and connected in another suitable manner. The processor 610 may be configured to process instructions of a computer program by performing basic arithmetic, logic, and input/output operations. For example, the processor 610 may process instructions stored in the memory 620, the storage device 630, and the like and/or instructions executed in the computing apparatus 600 to display graphic information on an external input/output device 670 such as a display device coupled to the high-speed interface 650.

The communication device 640 may provide a configuration or function for the input/output device 670 and the computing apparatus 600 to communicate with each other through a network, and may provide a configuration or function for supporting the input/output device 670 and/or the computing apparatus 600 to communicate with other external devices. For example, a request or data generated by a processor of an external device according to an arbitrary program code may be transmitted to the computing apparatus 600 through a network under the control of the communication device 640. Conversely, a control signal or command provided under the control of the processor 610 of the computing apparatus 600 may be transmitted to another external device through the communication device 640 and a network.

In FIG. 6, the computing apparatus 600 is illustrated as including one processor 610, one memory 620, and the like, but is not limited thereto, and the computing apparatus 600 may be implemented using a plurality of memories, a plurality of processors, and/or a plurality of buses. In addition, although it is described above that one computing apparatus 600 exists in FIG. 6, it is not limited thereto, and a plurality of computing apparatuses may interact and perform operations necessary to execute the above-described method.

The memory 620 may store information in the computing apparatus 600. According to an embodiment, the memory 620 may include a volatile memory unit or a plurality of memory units. Additionally or alternatively, the memory 620 may be configured as a non-volatile memory unit or a plurality of memory units. In addition, the memory 620 may be configured as another form of computer-readable medium, such as a magnetic disk or an optical disk. In addition, an operating system and at least one program code and/or instruction may be stored in the memory 620.

The storage device 630 may be one or more mass storage devices for storing data for the computing apparatus 600. For example, the storage device 630 may be a computer-readable medium including, or be configured to include, a hard disk, a magnetic disc such as a removable disk, an optical disc, a semiconductor memory device such as an Erasable Programmable Read-Only Memory (EPROM), an Electrically Erasable PROM (EEPROM), a flash memory device, a CD-ROM, and a DVD-ROM disk. In addition, the computer program may be tangibly embodied in such a computer-readable medium.

The high-speed interface 650 and the low-speed interface 660 may be means for interaction with the input/output device 670. For example, input devices may include devices such as cameras including audio sensors and/or image sensors, keyboards, microphones, and mice, and output devices may include devices such as displays, speakers, and haptic feedback devices. In another example, the high-speed interface 650 and the low-speed interface 660 may be means for interfacing with a device in which configurations or functions for performing input and output are integrated into one, such as a touch screen.

According to an embodiment, the high-speed interface 650 manages bandwidth-intensive operations for the computing apparatus 600, whereas the low-speed interface 660 may manage operations less bandwidth-intensive than the high-speed interface 650. According to an embodiment, the high-speed interface 650 may be coupled to the memory 620, the input/output device 670, and high-speed expansion ports capable of accommodating various expansion cards. In addition, the low-speed interface 660 may be coupled to the storage device 630 and a low-speed expansion port. Additionally, a low-speed expansion port, which may include various communication ports (for example, USB, Bluetooth, Ethernet, wireless Ethernet), may be coupled to one or more input/output devices 670 such as a keyboard, pointing device, scanner, or networking devices such as a router, switch, via a network adapter.

The computing apparatus 600 may be implemented in a number of different forms. For example, the computing apparatus 600 may be implemented as a standard server, or as a group of such standard servers. Additionally or alternatively, the computing apparatus 600 may be implemented as part of a rack server system, or may be implemented as a personal computer such as a laptop computer. In this case, components from the computing apparatus 600 may be combined with other components in any mobile device. Such a computing apparatus 600 may include one or more other computing devices or may be configured to communicate with one or more other computing devices.

In FIG. 6, the input/output device 670 is illustrated as not being included in the computing apparatus 600, but is not limited thereto, and may be configured as a single device with the computing apparatus 600. In addition, in FIG. 6, the high-speed interface 650 and/or the low-speed interface 660 are illustrated as elements configured separately from the processor 610, but are not limited thereto, and the high-speed interface 650 and/or the low-speed interface 660 may be configured to be included in the processor.

The above-described method and/or various embodiments may be realized by a digital electronic circuit, computer hardware, firmware, software, and/or a combination thereof. Various embodiments of the present invention may be implemented as a computer program stored on a computer-readable medium and/or a computer-readable medium, and executed by a data processing device, for example, one or more programmable processors and/or one or more computing devices. The computer program described above may be written in any form of programming language, including compiled or interpreted languages, and may be distributed in any form, such as a standalone program, module, or subroutine. A computer program may be distributed across a single computing device, across multiple computing devices connected through the same network, and/or across multiple distributed computing devices connected through multiple different networks.

The above-described methods and/or various embodiments may be performed by one or more processors configured to execute one or more computer programs that process, store, and/or manage any functions by operating on input data or generating output data. For example, the method and/or various embodiments of the present invention may be performed by a special purpose logic circuit such as a FPGA(Field Programmable Gate Array) or an ASIC(Application Specific Integrated Circuit), and an apparatus and/or system for performing the method and/or embodiments of the present invention may be implemented as a special purpose logic circuit such as an FPGA or an ASIC.

The one or more processors executing the computer program may include a general-purpose or special-purpose microprocessor and/or one or more processors of any type of digital computing device. The processor can receive instructions and/or data from either a read-only memory or a random access memory, or it can receive instructions and/or data from both the read-only memory and the random access memory. In the present invention, components of a computing device performing the methods and/or embodiments may include one or more processors for executing instructions and one or more memory devices for storing instructions and/or data.

According to one embodiment, the computing device can exchange data with one or more mass storage devices for storing data. For example, the computing device may receive data from a magnetic disc or an optical disc, and/or transfer data to a magnetic disc or an optical disc. A computer-readable storage medium suitable for storing instructions and/or data associated with a computer program may include, but is not limited to, any form of non-volatile memory, including semiconductor memory devices such as Erasable Programmable Read-Only Memory (EPROM), Electrically Erasable Programmable Read-Only Memory (EEPROM), and flash memory devices. For example, the computer-readable medium may include a magnetic disk, such as an internal hard disk or a removable disk, a magneto-optical disk, and CD-ROM and DVD-ROM disks.

To provide interaction with a user, the computing device may include, but is not limited to, a display device (for example, a Cathode Ray Tube (CRT) or a Liquid Crystal Display (LCD)) for providing or displaying information to the user, and a pointing device (for example, a keyboard, a mouse, or a trackball) for enabling the user to provide input and/or commands to the computing device. That is, the computing device may further include any other types of devices for providing interaction with the user. For example, a computing device may provide any form of sensory feedback to a user for interaction with the user, including visual feedback, auditory feedback, and/or tactile feedback. In this regard, a user can provide input to the computing device through various gestures such as sight, sound, and motion.

In the present invention, various embodiments may be implemented in a computing device including a back-end component (for example, a data server), a middleware component (for example, an application server), and/or a front-end component. In this case, the components may be interconnected by any form or medium of digital data communication, such as a communication network. According to one embodiment, the communication network may be comprised of a wired network such as Ethernet, a wired home network (Power Line Communication), a telephone line communication device, and RS-serial communication, a mobile communication network, a wireless network such as WLAN (Wireless LAN), Wi-Fi, Bluetooth, and ZigBee, or a combination thereof. For example, a communication network may include a Local Area Network (LAN) or a Wide Area Network (WAN).

A computing device based on the embodiments described herein may be implemented using hardware and/or software configured to interact with a user, including a user device, a user interface (UI) device, a user terminal, or a client device. For example, the computing device may include a portable computing device such as a laptop computer. Additionally or alternatively, the computing device may include, but is not limited to, Personal Digital Assistants (PDAs), tablet PCs, game consoles, wearable devices, Internet of Things (IoT) devices, virtual reality (VR) devices, and augmented reality (AR) devices. The computing device may further include other types of devices configured to interact with a user. Additionally, the computing device may include a portable communication device (for example, a mobile phone, a smart phone, or a wireless cellular phone) suitable for wireless communication over a network such as a mobile communication network. The computing device may be configured to communicate wirelessly with a network server using wireless communication technologies and/or protocols, such as Radio Frequency (RF), Microwave Frequency (MWF), and/or Infrared Frequency (IR Frequency).

The embodiments of the present invention are not limited to those described above and may be implemented in various other forms. Additionally, the terms used in the present invention are intended to describe some embodiments and are not to be construed as limiting the embodiments. For example, singular words and the like may be interpreted to include the plural as well, unless the context clearly indicates otherwise.

In the present invention, unless otherwise defined, all terms used herein, including technical and scientific terms, shall have the same meaning as commonly understood by those of ordinary skill in the art to which the embodiments pertain. Additionally, commonly used terms, such as terms defined in a dictionary, should be interpreted to have a meaning consistent with their meaning in the context of the relevant technology.

Although the present invention has been described in connection with some embodiments herein, various modifications and changes can be made without departing from the scope of the present invention as understood by those skilled in the art to which the present invention pertains. Furthermore, such modifications and variations should be considered to fall within the scope of the claims appended to this specification.

## Claims

1. A method for calibrating a battery exterior inspection camera performed by at least one processor, the method comprising:
generating a reference image by photographing a color checker including a plurality of color regions with a reference camera;
generating a calibration target image by photographing the color checker with a calibration target camera;
extracting a first red (R) value, a first green (G) value, and a first blue (B) value corresponding to the plurality of color regions of the color checker from the reference image;
extracting a second R value, a second G value, and a second B value corresponding to the plurality of color regions from the calibration target image;
generating a look-up table (LUT) for each RGB channel based on the extracted first R value, the first G value, the first B value, the second R value, the second G value, and the second B value; and
calibrating a color and a brightness of the calibration target camera based on the generated LUT for each RGB channel.

2. The method of claim 1, wherein
the extracting of the first R value, the first G value, and the first B value corresponding to the plurality of color regions of the color checker from the reference image comprises:
converting the reference image of a Bayer pattern into a reference image of an RGB pattern based on a demosaic algorithm; and
extracting the first R value, the first G value, and the first B value corresponding to the plurality of color regions from the reference image of the RGB pattern.

3. The method of claim 1, wherein
the generating of the LUT for each RGB channel based on the extracted first R value, the first G value, the first B value, the second R value, the second G value, and the second B value comprises:
calculating a first regression equation of the first R value and the second R value;
extracting an R channel coefficient and an R channel constant of the calculated first regression equation; and
generating an R channel LUT based on the extracted R channel coefficient and the R channel constant.

4. The method of claim 3, wherein
the generating of the LUT for each RGB channel based on the extracted the first R value, the first G value, the first B value, the second R value, the second G value, and the second B value comprises:
calculating a second regression equation of the first G value and the second G value;
extracting a G channel coefficient and a G channel constant of the calculated second regression equation; and
generating a G channel LUT based on the extracted G channel coefficient and the G channel constant.

5. The method of claim 4, wherein
the generating of the LUT for each RGB channel based on the extracted first R value, the first G value, the first B value, the second R value, the second G value, and the second B value comprises:
calculating a third regression equation of the first B value and the second B value;
extracting a B channel coefficient and a B channel constant of the calculated third regression equation; and
generating a B channel LUT based on the extracted B channel coefficient and the B channel constant.

6. The method of claim 5, wherein
the calibrating of the color and the brightness of the calibration target camera based on the generated LUT for each RGB channel comprises:
calibrating the color and the brightness of the calibration target camera by converting the second R value, the second G value, and the second B value based on the R channel LUT, the G channel LUT, and the B channel LUT.

7. The method of claim 5, further comprising:
storing the generated R channel LUT, the G channel LUT, and the B channel LUT in a database; and
wherein
the calibrating of the color and the brightness of the calibration target camera based on the generated LUT for each RGB channel comprises:
retrieving the R channel LUT, G channel LUT, and B channel LUT stored in the database; and
calibrating the color and the brightness of the calibration target camera based on the retrieved R channel LUT, the G channel LUT, and the B channel LUT.

8. The method of claim 1, further comprising
determining gain values of the reference camera and the calibration target camera as a reference value.

9. A computer program stored in a non-transitory computer-readable recording medium for executing the method according to claim 1 on a computer.

10. A battery exterior inspection camera calibration apparatus comprising:
a reference camera and a calibration target camera configured to perform a battery exterior inspection;
a database configured to store a look-up table (LUT) for each red, blue, and green (RGB) channel for calibrating a color and a brightness of the calibration target camera; and
a control apparatus configured to generate the LUT for each RGB channel using a reference image generated by photographing a color checker with the reference camera and a calibration target image generated by photographing the color checker with the calibration target camera, and calibrate the color and the brightness of the calibration target camera based on the generated LUT for each RGB channel.

11. The battery exterior inspection camera calibration apparatus of claim 10, wherein
the control apparatus
extracts a first red ^{®} value, a first green (G) value, and a first blue (B) value corresponding to a plurality of color regions of the color checker from the reference image,
extracts a second R value, a second G value, and a second B value corresponding to the plurality of color regions from the calibration target image,
generates the LUT for each RGB channel based on the extracted first R value, the first G value, the first B value, the second R value, the second G value, and the second B value, and
calibrates the color and the brightness of the calibration target camera based on the generated LUT for each RGB channel.

12. The battery exterior inspection camera calibration apparatus of claim 11, wherein
the control apparatus
converts the reference image of a Bayer pattern into a reference image of an RGB pattern based on a demosaic algorithm, and
extracts the first R value, the first G value, and the first B value corresponding to the plurality of color regions from the reference image of the RGB pattern.

13. The battery exterior inspection camera calibration apparatus of claim 11, wherein
the control apparatus
calculates a first regression equation of the first R value and the second R value,
extracts an R channel coefficient and an R channel constant of the calculated first regression equation, and
generates an R channel LUT based on the extracted R channel coefficient and the R channel constant.

14. The battery exterior inspection camera calibration apparatus of claim 13, wherein
the control apparatus
calculates a second regression equation of the first G value and the second G value,
extracts a G channel coefficient and a G channel constant of the calculated second regression equation, and
generates a G channel LUT based on the extracted G channel coefficient and the G channel constant.

15. The battery exterior inspection camera calibration apparatus of claim 14, wherein
the control apparatus
calculates a third regression equation of the first B value and the second B value,
extracts a B channel coefficient and a B channel constant of the calculated third regression equation, and
generates a B channel LUT based on the extracted B channel coefficient and the B channel constant.

16. The battery exterior inspection camera calibration apparatus of claim 15, wherein
the control apparatus
calibrates the color and the brightness of the calibration target camera by converting the second R value, the second G value, and the second B value based on the R channel LUT, the G channel LUT, and the B channel LUT.

17. The battery exterior inspection camera calibration apparatus of claim 15, wherein
the control apparatus
stores the generated R channel LUT, the G channel LUT, and the B channel LUT in a database,
retrieves the R channel LUT, the G channel LUT, and the B channel LUT stored in the database, and
calibrates the color and the brightness of the calibration target camera based on the retrieved R channel LUT, the G channel LUT, and the B channel LUT.

18. The battery exterior inspection camera calibration apparatus of claim 11, wherein
the control apparatus
determines gain values of the reference camera and the calibration target camera as a reference value.
